# EUROPEAN PATENT SPECIFICATION

(11) **EP 2 754 523 B1**
(45) Date of publication and mention of the grant of the patent: **23.12.2020**
(21) Application number: 14150418.3
(22) Date of filing: 08.01.2014
(51) Int. Cl.: B23H 7/10, B23H 7/18, B23H 7/20, G05B 19/404

(54) **Wire electric discharge machine having function of compensating position of wire electrode**
Drahterodiermachine mit Funktion zum Ausgleichen der Position einer Drahtelektrode
Machine à décharge électrique à fil possédant une fonction de compensation de position d'électrode en fil

(30) Priority: 11.01.2013 JP 2013003644
(43) Date of publication of application: 16.07.2014
(73) Proprietor: FANUC CORPORATION, Oshino-mura Minamitsuru-gun Yamanashi 401-0597 (JP)
(72) Inventor: Yoshizaki, Daisuke, Minamitsuru-gun Yamanashi 401-0597 (JP); Makino, Yoshinori, Minamitsuru-gun Yamanashi 401-0597 (JP)
(74) Representative: Haseltine Lake Kempner LLP

(56) References cited:
- EP-A1- 0 715 920
- DE-T5-112012 000 920
- US-A1- 2009 143 891

## Description

### BACKGROUND OF THE INVENTION

### 1. Field of the Invention

The present invention relates to a wire electric discharge machine having a function of compensating the displacement of a wire electrode that is caused by the pressure of a machining fluid.

### 2. Description of the Related Art

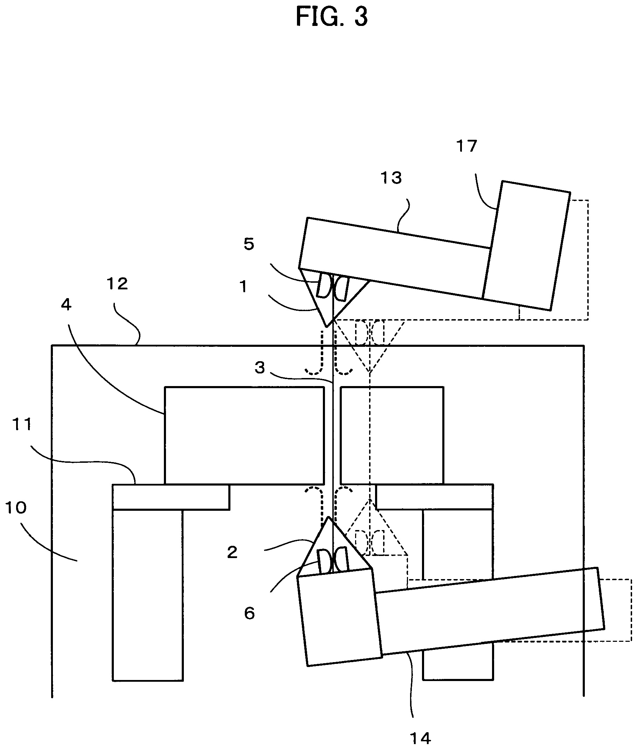

A positional relation between a wire electrode and a workpiece in a wire electric discharge machine in the related art will be described with reference to FIG. 3.

The wire electric discharge machine performs the machining of a workpiece 4 by generating electric discharge between a wire electrode 3 and the workpiece 4. A workpiece mounting stand 11 on which the workpiece 4 to be machined by electric discharge machining is placed is disposed in a machining tank 12 that stores a machining fluid 10.

An upper nozzle 1 ejects the machining fluid from the upper side of the workpiece 4. A lower nozzle 2 ejects the machining fluid from the lower side of the workpiece 4. An upper wire guide 5 holds the wire electrode 3 above the workpiece 4. A lower wire guide 6 holds the wire electrode 3 below the workpiece 4. An upper guide block 13 is provided with the upper nozzle 1 and the upper wire guide 5, and a lower arm 14 is provided with the lower nozzle 2 and the lower wire guide 6.

The wire electric discharge machine performs electric discharge machining between the wire electrode 3 and the workpiece 4 through the machining fluid. If electric discharge takes place in a state where the machining fluid is not supplied to a portion to be machined between the wire electrode 3 and the workpiece 4, machining becomes unstable and the wire electrode 3 is broken in the worst case. Further, when electric discharge machining is carried out, machining chips are generated at a portion to be machined. However, if electric discharge machining is carried out while the machining chips are present at the portion to be machined, machining does not become stable. For this reason, for a stable machining, machining is performed while the machining fluid is ejected to the portion to be machined from the upper and lower nozzles 1 and 2 with a high pressure to blow off the machining chips.

However, when the machining fluid is ejected from the upper and lower nozzles 1 and 2 with a high pressure as illustrated in FIG. 3, mechanical components (the upper guide block 13 and the lower arm 14) are deformed by a repulsive force of the ejected machining fluid. Accordingly, the positions of the upper and lower wire guides 5 and 6 and the position of the wire electrode 3 are displaced from normal positions. In FIG. 3, a solid line shows the states of the wire electrode 3 and the mechanical components (the upper guide block 13 and the lower arm 14) that have been displaced by the pressure of the ejected machining fluid, and a broken line shows the states of the wire electrode 3 and the mechanical components (the upper guide block 13 and the lower arm 14) that have not been subjected to displacement caused by the pressure of the machining fluid.

The mechanical components (the upper guide block 13 and the lower arm 14) are deformed by the repulsive force of the pressure of the machining fluid ejected from the upper and lower nozzles 1 and 2, so that the guide positions of the upper and lower wire guides 5 and 6 holding the wire electrode 3 are displaced. As a result, the position of the wire electrode 3 relative to the workpiece 4 is shifted, so that machining is performed at a position that does not correspond to a machining command based on a machining program. Accordingly, the ejection of the machining fluid from the upper and lower nozzles 1 and 2 with a high pressure is essential to stable machining, but there is a problem in that the ejection of the machining fluid from the upper and lower nozzles 1 and 2 with a high pressure causes the deterioration of machining accuracy.

Accordingly, as a method of compensating the displacement of the positions of the guides that is caused by a repulsive force obtained at the time of the ejection of the machining fluid from the upper and lower nozzles 1 and 2, Japanese Patent Application Laid-Open No. 2-160424 discloses a method including ejecting a machining fluid with the pressure of the machining fluid in a machining condition of actual machining before the start of the actual machining, actually measuring the amount of displacement of a guide generated at that time by an indicator or the like, inputting the actually measured amounts of displacement to a controller of a wire electric discharge machine, and performing machining after compensating the displacement of the position of the guide at the time of actual machining.

However, since the pressure of the ejected machining fluid is changed depending on the shape, machining shape, and machining condition of the workpiece 4, the pressure of the ejected machining fluid is not constant and is changed during machining. For this reason, even though the pressure of the machining fluid is measured in advance, the pressure of the machining fluid ejected at the time of measurement may be different from the pressure of the machining fluid ejected during actual machining and it is not possible to cope with the change of the pressure of the machining fluid during machining. Accordingly, it is not possible to continue to compensate displacement that is caused by an appropriate pressure of the machining fluid. Further, since the displacement amounts of the upper and lower nozzles 1 and 2 are measured and are input to the controller of the wire electric discharge machine whenever the machining condition is changed or the workpiece 4 is replaced, time and man hours are required to measure the displacement amounts of the upper and lower nozzles 1 and 2 and to input the measured displacement amounts to the controller of the wire electric discharge machine. Furthermore, there is a possibility that an amount of compensation is erroneously set due to a measurement error when the displacement amounts of the upper and lower nozzles 1 and 2 are measured.

Accordingly, in a compensation method which measures amounts of the displacement of the upper and lower wire guides 5 and 6 caused by the pressure of the machining fluid before machining and determines the amount of compensation, an appropriate compensation cannot continue to be performed in the actual machining and a lot of man hours are required. Accordingly, there is a problem in that the compensation method is not realistic.

Document EP0715920A1 discloses a wire cutting electrical discharge machining apparatus which is configured to correct displacements of an upper wire guide, wherein displacements are determined by measuring the strain which occurs in the upper wire guide supporting arm in the lateral direction and/or longitudinal direction using strain gauges. Alternatively, displacements of the upper wire guide are corrected in accordance with a quantity of a machining liquid spouted from the upper wire guide toward the work.

### SUMMARY OF THE INVENTION

The invention has been made in consideration of the problems in the related art, and an object of the invention is to provide a wire electric discharge machine that detects the pressures of a machining fluid ejected from upper and lower nozzles and compensates the displacement of a wire electrode according to the detected pressures of the machining fluid on the basis of relational expressions stored in advance.

A wire electric discharge machine according to the present invention supports a wire electrode by upper and lower wire guides provided in upper and lower nozzles, respectively, and performs electric discharge machining while moving the wire electrode relative to a workpiece according to a machining program and supplying a machining fluid from the upper and lower nozzles. The wire electric discharge machine includes: a fluid pressure detecting unit that detects the pressure of the machining fluid supplied from the upper nozzle and the pressure of the machining fluid supplied from the lower nozzle during the electric discharge machining; a memory device that stores a relational expression representing a relation between the pressure of the machining fluid detected by the fluid pressure detecting unit and a displacement amount of each of the upper and lower wire guides corresponding to the pressure of the machining fluid; and a controller that obtains displacement amounts of the upper and lower wire guides, which correspond to the pressure of the machining fluid detected by the fluid pressure detecting unit, from the relational expression stored in the memory device, calculates positional compensation values of the upper and lower wire guides on the basis of the obtained displacement amounts, and compensates the position of the wire electrode relative to the workpiece by compensating command values of the machining program on the basis of the calculated positional compensation values.

The wire electric discharge machine may further include: a setting unit that sets, when the command values of the machining program are compensated using the compensation values, a compensation time interval during which the compensation values are added to a machining command of the machining program, and a maximum compensation movement amount which is a maximum value of the compensation values to be added in every compensation time interval; and a compensation value output unit that outputs the compensation values on the basis of the compensation time intervals and the maximum compensation movement amount set by the setting unit.

According to the invention, it is possible to provide a wire electric discharge machine that detects the pressures of a machining fluid ejected from upper and lower nozzles and compensates the displacement of a wire electrode according to the detected pressures of the machining fluid on the basis of relational expressions stored in advance.

### BRIEF DESCRIPTION OF THE DRAWINGS

The forgoing and other objects and feature of the invention will be apparent from the following description of preferred embodiments of the invention with reference to the accompanying drawings, in which:
FIG. 1 is a schematic diagram illustrating the structure of a wire electric discharge machine according to an embodiment of the invention;

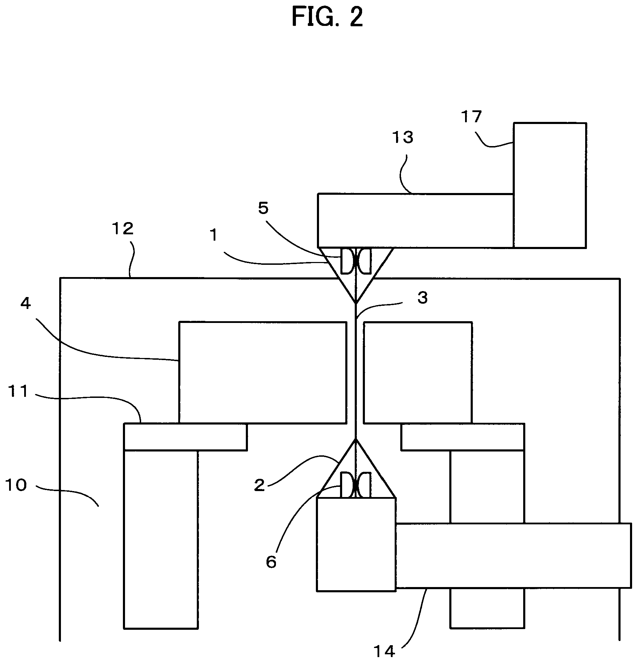

FIG. 2 is an enlarged view of a portion illustrated by a broken line of FIG. 1; and
FIG. 3 is a diagram illustrating a positional relation between a wire electrode and a workpiece in a wire electric discharge machine in the related art.

### DETAILED DESCRIPTION OF THE PREFERRED EMBODIMENTS

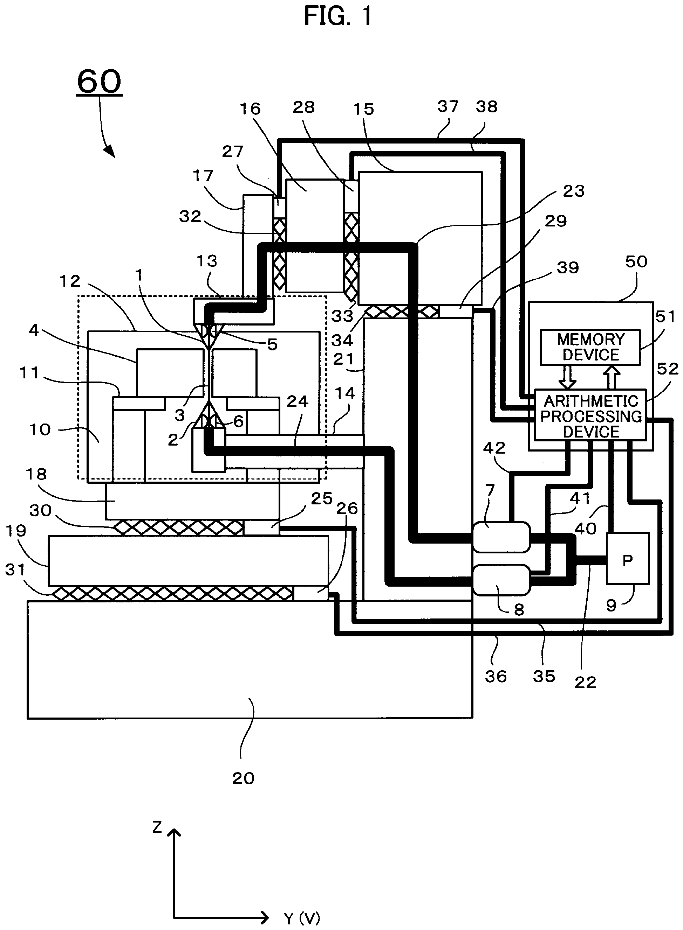

A wire electric discharge machine according to an embodiment of the invention will be described with reference to FIG. 1.

A wire electric discharge machine 60 performs the machining of a workpiece 4 by generating electric discharge between a wire electrode 3 and the workpiece 4. The wire electric discharge machine 60 includes a saddle (X axis) 19 that is provided on a bed 20 and is moved in an X-axis direction by a ball screw 31 driven by an X-axis motor 26, and further includes a table (Y axis) 18 that is provided on the saddle (X axis) 19 and is moved in a Y-axis direction by a ball screw 30 driven by a Y-axis motor 25. A machining tank 12 including a workpiece mounting stand 11, which is provided therein and on which the workpiece 4 is placed, is fixed onto the table (Y axis) 18.

A column 21 is vertically erected on the bed 20. A lower arm 14 is horizontally mounted on the side surface of the column 21. A lower nozzle 2 and a lower wire guide 6 are mounted on the lower arm 14 at the end thereof. The lower nozzle 2 and the lower wire guide 6 are positioned below the workpiece 4 that is placed on the workpiece mounting stand 11. The column 21 is provided with a V saddle (V axis) 15 at the upper portion thereof. The V saddle (V axis) 15 is moved in a V-axis direction by a ball screw 34 that is driven by a V-axis motor 29. A V-axis direction is the same as the Y-axis direction. A saddle (U axis) 16 is mounted on the V saddle (V axis) 15. The saddle (U axis) 16 is moved in a U-axis direction by a ball screw 33 that is driven by a U-axis motor 28. The U-axis direction is the same as the X-axis direction.

A head 17 is mounted on the saddle (U axis) 16. The head 17 is moved in a Z-axis direction by a ball screw 32 that is driven by a Z-axis motor 27. Further, an upper guide block 13 is fixed to the head 17. An upper nozzle 1 and an upper wire guide 5 are mounted on the upper guide block 13 at the end portion thereof.

Since the Y-axis motor 25, the X-axis motor 26, the Z-axis motor 27, the U-axis motor 28, and the V-axis motor 29 are connected to a controller 50 by power/signal lines 35, 36, 37, 38, and 39, respectively, so that power (electric power) is supplied to each of amplifiers (not illustrated) of these motors 25, 26, 27, 28, and 29 from the controller 50 and various signals are transmitted and received between these motors and the controller 50. Meanwhile, in FIG. 1, the X axis and the U axis are directions perpendicular to the plane of the drawing sheet of FIG. 1, the Y axis and the V axis are horizontal directions of the plane of the drawing sheet of FIG. 1, and the Z axis is a vertical direction of the plane of the drawing sheet of FIG. 1.

The machining tank 12 is mounted on the table (Y axis) 18. The workpiece mounting stand 11 is disposed in the machining tank 12. The workpiece 4, which is to be machined by electric discharge machining, is placed on the workpiece mounting stand 11. The electric discharge machining is carried out in a state where a machining fluid 10 is stored in the machining tank 12. The upper nozzle 1 ejects the machining fluid from the upper side of the workpiece 4. The lower nozzle 2 ejects the machining fluid from the lower side of the workpiece 4. The upper wire guide 5 holds the wire electrode 3 above the workpiece 4, and the lower wire guide 6 holds the wire electrode 3 below the workpiece 4.

The wire electric discharge machine 60 performs electric discharge machining between the wire electrode 3 and the workpiece 4 through the machining fluid 10. To perform stable electric discharge machining, a machining fluid pump 9 pumps up the machining fluid from a storage tank (not illustrated) that stores the machining fluid, and ejects the machining fluid to a portion to be machined from the upper and lower nozzles 1 and 2 through pipe lines 22, 23, and 24 with a high pressure. The wire electric discharge machining is carried out while machining chips are blown off by the ejected machining fluid.

The machining fluid pump 9 is connected to the controller 50, which includes an amplifier (not illustrated), through a power/signal line 40, and is controlled by the controller 50. Power (electric power) is supplied to the machining fluid pump 9 from the controller 50, so that signals are transmitted and received between the controller 50 and the machining fluid pump 9. The machining fluid pump 9 supplies the machining fluid to the upper nozzle 1 through the branched pipe line 22 and the pipe line 23, and supplies the machining fluid to the lower nozzle 2 through the branched pipe line 22 and the pipe line 24. As a result, the machining fluid is ejected to a portion to be machined, which is being subjected to electric discharge machining, from the upper nozzle 1 and the machining fluid is ejected to the portion to be machined, which is being subjected to electric discharge machining, from the lower nozzle 2.

An upper machining fluid pressure detector 7, which is disposed on the pipe line 23, detects the pressure of the machining fluid that is ejected from the upper nozzle 1. Meanwhile, a lower machining fluid pressure detector 8, which is disposed on the pipe line 24, detects the pressure of the machining fluid that is ejected from the lower nozzle 2. The respective detected fluid pressure values, which are detected by the upper and lower machining fluid pressure detectors 7 and 8, are sent to the controller 50 through signal lines 41 and 42. Meanwhile, when an interval between the upper surface of the workpiece 4 and the upper nozzle 1 is different from an interval between the lower surface of the workpiece 4 and the lower nozzle 2, the pressure of the machining fluid ejected from the upper nozzle 1 is different from the pressure of the machining fluid ejected from the lower nozzle 2. For this reason, the pressures of the machining fluid, which is ejected from the upper and lower nozzles 1 and 2, are detected by the fluid pressure detectors that are provided on the respective pipe lines.

The controller 50 is a device that controls the entire wire electric discharge machine, and includes an arithmetic processing device 52 and a memory device 51. The arithmetic processing device 52 includes an arithmetic unit, a display unit, an interface that inputs and outputs various signals, and an amplifier. Various data are stored in the memory device 51. Meanwhile, the memory device 51 may be provided outside the controller 50 (that is, as an external memory device).

A relation between the pressure of the machining fluid and the displacements of the upper and lower wire guides 5 and 6 is stored in the memory device 51 in advance in the form of a relational expression so that the controller 50 can calculate a value corresponding to the detected pressure value of the machining fluid. A relational expression for the upper machining fluid pressure detector 7 and a relational expression for the lower machining fluid pressure detector 8 are prepared respectively as the relational expression.

The arithmetic processing device 52 of the controller 50 obtains the displacement amounts of the upper and lower guides 5 and 6, which correspond to the respective detected fluid pressure values detected by the upper and lower machining fluid pressure detectors 7 and 8, by using the relational expressions stored in the memory device 51, and calculates upper and lower wire guide positional compensation values A and B of the upper and lower guides 5 and 6 on the basis of the obtained displacement amounts. Further, the respective axes of the wire electric discharge machine 60 are controlled according to machining commands obtained by compensating machining commands, which are obtained from a machining program, by using the positional compensation values A and B (see Tables 1 and 2).

The upper and lower machining fluid pressure detectors 7 and 8 are installed on the pipe lines 23 and 24 that connect the machining fluid pump 9 to the upper and lower nozzles 1 and 2, and the pressures of the machining fluid, which is ejected from the upper and lower nozzles 1 and 2, are detected by the upper and lower machining fluid pressure detectors 7 and 8 during machining, respectively. Accordingly, it is possible to accurately and instantly cope with the change of the machining fluid pressure that is caused by the change of the shape, the machining shape, and the machining condition of the workpiece 4, and to continue to appropriately compensate the displacement of the position of the wire electrode 3.

The controller 50 obtains displacement amounts of the respective upper and lower wire guides 5 and 6 from the fluid pressure values that are detected by the upper and lower machining fluid pressure detectors 7 and 8, on the basis of the relational expressions which are stored in the memory device 51. Further, a compensation value, which is used to compensate a movement command based on the machining program, is obtained on the basis of the obtained displacement amounts of each of the upper and lower wire guides 5 and 6.

Table 1 shows a relation between the pressure of the machining fluid and the positional compensation value A of the upper wire guide 5, and Table 2 shows a relation between the pressure of the machining fluid and the positional compensation value B of the lower wire guide 6. Meanwhile, Table 1 shows that the upper wire guide positional compensation value A is 10.0-B when the pressure of a machining fluid is 1.5 [Mpa] . In this case, the numerical value '10.0' is a displacement amount of the upper wire guide 5. Further, as shown in Table 2, the numerical value '4.0' in the lower wire guide positional compensation value B is a displacement amount of the lower wire guide 6.

**Table 1**

| PRESSURE OF MACHINING FLUID [Mpa] | UPPER WIRE GUIDE POSITIONAL COMPENSATION VALUE: A V-AXIS [µm] |
|---|---|
| 1.5 | 10.0-B |
| 1.4 | 9.5-B |
| . | . |
| . | . |
| . | . |
| . | . |
| . | . |

**Table 2**

| PRESSURE OF MACHINING FLUID [Mpa] | LOWER WIRE GUIDE POSITIONAL COMPENSATION VALUE: B Y-AXIS [µm] |
|---|---|
| 1.5 | 4.0 |
| 1.4 | 3.7 |
| . | . |
| . | . |
| . | . |
| . | . |
| . | . |

When the upper wire guide positional compensation value is denoted by A and the lower wire guide positional compensation value is denoted by B, the upper wire guide positional compensation value A is added to a V-axis movement command value of the upper guide block 13 and the lower wire guide positional compensation value B is added to a Y-axis movement command value.

To compensate a relative positional relation between the wire electrode 3 and the workpiece 4, the lower wire guide positional compensation value B is directly obtained from the displacement amount which is calculated from an expression (for conversion of the pressure of machining fluid into the displacement amount of wire guide) stored in the memory device 51, whereas the upper wire guide positional compensation value A is obtained from the value obtained by subtracting, from the displacement amount which is calculated from the expression stored in the memory device 51, the lower wire guide positional compensation value B.

Accordingly, a user of the wire electric discharge machine 60 does not need to measure compensation values, and the controller 50 automatically calculates compensation values on the basis of the relational expressions, which are stored in the memory device 51, according to the change of the fluid pressures that are detected by the fluid pressure detectors 7 and 8. Therefore, the user also does not need to input a displacement amount of the wire guides, pressure of the fluid, or the height of the workpiece. Further, since human errors caused by a user are reduced, it is possible to continue to carry out an appropriate compensation while reducing man hours, such as measurement or input operations which are required to carry out compensation.

Each time the fluid pressures detected by the upper and lower machining fluid pressure detectors 7 and 8 are changed, the controller 50 takes out displacement amounts of the respective upper and lower wire guides 5 and 6 corresponding to the fluid pressures, from the memory device 51 which stores a relational expression representing a relation between the pressure of the machining fluid and the displacement of each of the upper and lower wire guides, and calculates compensation values from the displacement amounts and adds the calculated compensation values to the respective machining command positions of the upper and lower wire guides 5 and 6. Accordingly, even though the pressures of the machining fluid ejected from the upper and lower nozzles 1 and 2 are changed during machining, command values of the machining program is compensated so that the relative positional relation between the wire electrode 3 and the workpiece 4 is always held to be the positional relation as specified by the machining commands.

In the above-mentioned embodiment of the invention, the upper and lower machining fluid pressure detectors 7 and 8 are used. When the pressure values of the machining fluid ejected from the upper and lower nozzles 1 and 2 are equal to each other, or when a relation between the pressure value of the machining fluid ejected from the upper nozzle 1 and the pressure value of the machining fluid ejected from the lower nozzle 2 is already known, it is possible to detect the pressure of the machining fluid ejected from any one of the upper and lower nozzle 1 and 2 by using only one of the upper and lower machining fluid pressure detectors 7 and 8.

Incidentally, when movement commands of the machining program are compensated during machining, the pressure of the machining fluid ejected from the upper or lower nozzle 1 or 2 is sometimes suddenly changed and a large compensation value is obtained. In this case, when the wire electrode is moved to a compensated position thereof relative to the workpiece in a relatively short time, compensation can be instantly made at an appropriate position at any rate. However, there is a possibility that the sudden movement of the wire electrode to the compensated position affects a machining shape or a surface roughness.

Such a possibility can be eliminated by appropriately setting a time interval (compensation time interval) during which a compensation value is added to a machining command (movement command of the machining program) during machining, and setting (or limiting) the maximum value (maximum compensation movement amount) of the compensation values to be added in every compensation time interval. The compensation time interval and the maximum value of the compensation value to be added in every compensation time interval can be input to the controller 50 by input means (not illustrated), and the compensation time interval and the maximum value of the compensation value, which are input, can be stored in the memory device 51 of the controller 50. For example, in case where the compensation time interval is set to 1 second and the maximum compensation movement amount, which is an output compensation value used for compensation per compensation time interval, is set to 1 µm, and if the pressure of the machining fluid is detected and the calculated compensation value is 2.5 µm, compensation value of 1 µm (the maximum compensation movement amount) is added to a machining command two time every one second and then (after one second) compensation value of 0.5 µm is added once to a machining command, with the result that it is possible to carry out compensation which is smoother than the compensation of a case in which a compensation value is added to a machining command at a time. By setting such a compensation time interval and such a maximum compensation movement amount, it is possible to provide appropriate compensation conditions to the machining shape or the surface roughness of the workpiece 4 on which electric discharge machining is being carried out.

When the invention is used as described above, it is possible to always reduce the relative displacement of the wire electrode 3 with respect to the workpiece 4 that is caused by the pressures of the machining fluid ejected from the upper and lower nozzles 1 and 2.

## Claims

1. A wire electric discharge machine (60) that supports a wire electrode (3) by upper and lower wire guides (5, 6) provided in upper and lower nozzles (1, 2), respectively, and performs electric discharge machining while moving the wire electrode (3) relative to a workpiece (4) according to a machining program and supplying a machining fluid from the upper and lower nozzles (1, 2), the wire electric discharge machine (60) comprising:
a fluid pressure detecting unit (7, 8) that detects the pressure of the machining fluid supplied from the upper nozzle (1) and the pressure of the machining fluid supplied from the lower nozzle (2) during the electric discharge machining;
a memory device (51) that stores a relational expression representing a relation between the pressure of the machining fluid detected by the fluid pressure detecting unit (7, 8) and a displacement amount of each of the upper and lower wire guides (5, 6) corresponding to the pressure of the machining fluid; and
a controller (50) that obtains displacement amounts of the upper and lower wire guides (5, 6), which correspond to the pressure of the machining fluid detected by the fluid pressure detecting unit (7, 8), from the relational expression stored in the memory device (51), calculates positional compensation values of the upper and lower wire guides (5, 6) on the basis of the obtained displacement amounts, and compensates the position of the wire electrode (3) relative to the workpiece (4) by compensating command values of the machining program on the basis of the calculated positional compensation values.

2. The wire electric discharge machine (60) according to claim 1, further comprising:
a setting unit that sets, when the command values of the machining program are compensated using the compensation values, a compensation time interval during which the compensation values are added to a machining command of the machining program, and a maximum compensation movement amount which is a maximum value of the compensation values to be added in every compensation time interval; and
a compensation value output unit that outputs the compensation values on the basis of the compensation time intervals and the maximum compensation movement amount set by the setting unit.

## Patentansprüche

1. Drahterodiermaschine (60), die eine Drahtelektrode (3) durch eine obere und eine untere Drahtführung (5, 6), welche jeweils in einer oberen und einer unteren Düse (1, 2) bereitgestellt sind, stützt und eine Erodierbearbeitung durchführt, während sie die Drahtelektrode (3) gemäß einem Bearbeitungsprogramm in Bezug auf ein Werkstück (4) bewegt, und von der oberen und der unteren Düse (1, 2) ein Bearbeitungsfluid liefert, wobei die Drahterodiermaschine (60)
eine Fluiddruckerfassungseinheit (7, 8), die während der Erodierbearbeitung den Druck des Bearbeitungsfluids, das von der oberen Düse (1) geliefert wird, und den Druck des Bearbeitungsfluids, das von der unteren Düse (2) geliefert wird, erfasst;
eine Speichervorrichtung (51), die einen Vergleichsausdruck, der eine Beziehung zwischen dem durch die Fluiddruckerfassungseinheit (7, 8) erfassten Druck des Bearbeitungsfluids und einem Verschiebungsausmaß einer jeden aus der oberen und der unteren Drahtführung (5, 6), das dem Druck des Bearbeitungsfluids entspricht, ausdrückt, speichert; und
eine Steuerung (50), die aus dem in der Speichervorrichtung (51) gespeicherten Vergleichsausdruck Verschiebungsausmaße der oberen und der unteren Drahtführung (5, 6), die dem durch die Fluiddruckerfassungseinheit (7, 8) erfassten Druck des Bearbeitungsfluids entsprechen, erhält, auf der Basis der erhaltenen Verschiebungsausmaße Kompensationswerte für die obere und die untere Drahtführung (5, 6) berechnet, und die Position der Drahtelektrode (3) in Bezug auf das Werkstück (4) durch Kompensieren von Befehlswerten des Bearbeitungsprogramms auf Basis der berechneten Positionskompensationswerte kompensiert, umfasst.

2. Drahterodiermaschine (60) nach Anspruch 1, ferner umfassend
eine Einstelleinheit, die beim Kompensieren der Befehlswerte des Bearbeitungsprogramms unter Verwendung der Kompensationswerte ein Kompensationszeitintervall, während dem die Kompensationswerte einem Bearbeitungsbefehl des Bearbeitungsprogramms hinzugefügt werden, und ein maximales Kompensationsbewegungsausmaß, das einen Höchstwert der Kompensationswerte, die in jedem Kompensationszeitintervall hinzugefügt werden sollen, darstellt, einstellt; und
eine Kompensationswertausgabeeinheit, die die Kompensationswerte auf Basis der Kompensationszeitintervalle und des maximalen Kompensationsbewegungsausmaßes, die durch die Einstelleinheit eingestellt wurden, ausgibt.

## Revendications

1. Machine à décharge électrique à fil (60) qui supporte une électrode en fil (3) par des fils-guides supérieur et inférieur (5, 6) prévus dans des buses supérieure et inférieure (1, 2), respectivement, et effectue un usinage par décharge électrique tout en se déplaçant l'électrode en fil (3) par rapport à une pièce à usiner (4) selon un programme d'usinage et fournissant un fluide d'usinage à partir des buses supérieure et inférieure (1, 2), la machine à décharge électrique à fil (60) comprenant :
une unité de détection de pression de fluide (7, 8) qui détecte la pression du fluide d'usinage fourni par la buse supérieure (1) et la pression du fluide d'usinage fourni par la buse inférieure (2) pendant l'usinage par décharge électrique ;
un dispositif de mémoire (51) qui stocke une expression relationnelle représentant une relation entre la pression du fluide d'usinage détectée par l'unité de détection de pression de fluide (7, 8) et une quantité de déplacement de chacun des fils-guides supérieur et inférieur (5, 6) correspondant à la pression du fluide d'usinage ; et
un dispositif de commande (50) qui obtient des quantités de déplacement des fils-guides supérieur et inférieur (5, 6), qui correspondent à la pression du fluide d'usinage détectée par l'unité de détection de pression de fluide (7, 8), à partir de l'expression relationnelle stockée dans le dispositif de mémoire (51), calcule des valeurs de compensation de position des fils-guides supérieur et inférieur (5, 6) sur la base des quantités de déplacement obtenues, et compense la position de l'électrode en fil (3) par rapport à la pièce à usiner (4) en compensant des valeurs d'instruction du programme d'usinage sur la base des valeurs de compensation de position calculées.

2. Machine à décharge électrique à fil (60) selon la revendication 1, comprenant en outre :
une unité de réglage qui définit, lorsque les valeurs de commande du programme d'usinage sont compensées à l'aide des valeurs de compensation, un intervalle de temps de compensation pendant lequel les valeurs de compensation sont ajoutées à une commande d'usinage du programme d'usinage, et une quantité de mouvement de compensation maximale qui est un valeur maximale des valeurs de compensation à ajouter à chaque intervalle de temps de compensation ; et
une unité de sortie de valeur de compensation qui délivre les valeurs de compensation sur la base des intervalles de temps de compensation et de la quantité de mouvement de compensation maximale définie par l'unité de réglage.
